# EUROPEAN PATENT APPLICATION

(11) **EP 4 410 914 A1**
(43) Date of publication of application: **07.08.2024**
(21) Application number: 22876349.6
(22) Date of filing: 28.09.2022
(51) Int. Cl.: C09J 7/38, B05D 1/34, B05D 1/36, B05D 3/02, B05D 7/04, B05D 7/24, C09J 7/24, C09J 11/08, C09J 123/10, C09J 153/02

(54) **ADHESIVE TAPE AND METHOD FOR MANUFACTURING ADHESIVE TAPE**

(30) Priority: 29.09.2021 JP 2021158890
(71) Applicant: Nitto Denko Corporation, Ibaraki-shi, Osaka 567-8680 (JP)
(72) Inventor: UCHIDA Sho, Ibaraki-shi, Osaka 567-8680 (JP); TAKEDA Kohei, Ibaraki-shi, Osaka 567-8680 (JP); UCHIDA Kentaro, Ibaraki-shi, Osaka 567-8680 (JP); IKISHIMA Shinsuke, Ibaraki-shi, Osaka 567-8680 (JP)
(74) Representative: Müller-Boré & Partner Patentanwälte PartG mbB
(86) International application number: PCT/JP2022/036202
(87) International publication number: WO 2023/054483

(57) **Abstract**

Provided are a pressure-sensitive adhesive tape in which anchoring failure is suppressed and a method of producing the pressure-sensitive adhesive tape. The pressure-sensitive adhesive tape according to an embodiment of the present invention includes a base material including an olefin-based resin, a first pressure-sensitive adhesive layer including an olefin-based resin, and a second pressure-sensitive adhesive layer including a styrene-based elastomer in the stated order. The method of producing a pressure-sensitive adhesive tape according to an embodiment of the present invention is a method of producing a pressure-sensitive adhesive tape including a base material including an olefin-based resin, a first pressure-sensitive adhesive layer including an olefin-based resin, and a second pressure-sensitive adhesive layer including a styrene-based elastomer in the stated order, the method including: applying a pressure-sensitive adhesive composition for forming the first pressure-sensitive adhesive layer to the base material by hot-melt coating; and applying a pressure-sensitive adhesive composition for forming the second pressure-sensitive adhesive layer to the first pressure-sensitive adhesive layer by the hot-melt coating.

## Description

### Technical Field

The present invention relates to a pressure-sensitive adhesive tape, and to a method of producing a pressure-sensitive adhesive tape.

### Background Art

There has been known a packaging container, such as a bag, having a fastener attached to an opening portion thereof so that the packaging container can be resealed after part of contents such as food and a detergent is taken out. The process of attaching a fastener to a bag is complicated, and the production cost of such bag is high. Thus, a bag having a resealing function has been investigated in place of the bag having a fastener attached thereto. As the bag having a resealing function, a bag including a resealing portion has been proposed (e.g., Patent Literature 1).

In addition, there has been known a method including fixing an unsealing portion through use of a pressure-sensitive adhesive tape so that the unsealing portion is not opened when a packaging container is resealed. The pressure-sensitive adhesive tape to be used for resealing is required to have a resealing property and an easy unsealing property. However, even when the pressure-sensitive adhesive tape has suitable pressure-sensitive adhesive characteristics at the time of its production, the pressure-sensitive adhesive strength thereof increases with time, and the packaging container may be damaged at the time of unsealing. In addition, when the packaging container is unsealed again, anchoring failure of the pressure-sensitive adhesive tape may occur to make it difficult to reuse the pressure-sensitive adhesive tape.

### Citation List

### Patent Literature

[PTL 1] 2014-15244 A

### Summary of Invention

### Technical Problem

The present invention has been made to solve the above-mentioned problems of the related art, and an object of the present invention is to provide a pressure-sensitive adhesive tape in which anchoring failure is suppressed.

### Solution to Problem

According to an embodiment of the present invention, there is provided a pressure-sensitive adhesive tape, including a base material including an olefin-based resin, a first pressure-sensitive adhesive layer including an olefin-based resin, and a second pressure-sensitive adhesive layer including a styrene-based elastomer in the stated order.

In one embodiment, the olefin-based resin included in the base material contains a propylene-based resin.

In one embodiment, a content of the propylene-based resin in the olefin-based resin included in the base material is from 40 wt% to 100 wt%.

In one embodiment, the first pressure-sensitive adhesive layer has a thickness of from 5 µm to 30 µm.

In one embodiment, the second pressure-sensitive adhesive layer has a thickness of from 5 µm to 50 µm.

In one embodiment, a surface of the base material on which the first pressure-sensitive adhesive layer is prevented from being formed is subjected to release treatment.

In one embodiment, the olefin-based resin included in the first pressure-sensitive adhesive layer contains a propylene-based resin.

In one embodiment, a pressure-sensitive adhesive composition for forming the first pressure-sensitive adhesive layer further contains a tackifier, and a content of the tackifier is from 20 wt% to 60 wt%.

In one embodiment, the second pressure-sensitive adhesive layer is formed of a pressure-sensitive adhesive composition containing a styrene-isoprene block copolymer, an olefin-based elastomer, and a tackifier.

In one embodiment, the styrene-isoprene block copolymer has a styrene content of from 10 wt% to 25 wt%.

In one embodiment, the styrene-isoprene block copolymer contains a diblock copolymer.

In one embodiment, a content of the tackifier is from 2 wt% to 40 wt%.

In one embodiment, the tackifier contains a hydrogenated petroleum resin.

In one embodiment, a pressure-sensitive adhesive composition for forming the second pressure-sensitive adhesive layer further contains an oil.

In one embodiment, a content of the oil is from 5 wt% to 30 wt%.

In one embodiment, the second pressure-sensitive adhesive layer has a pressure-sensitive adhesive strength to a stainless-steel plate of from 0.05 N/25 mm to 15 N/25 mm.

In one embodiment, a difference in melt viscosity at 160°C between a pressure-sensitive adhesive composition for forming the first pressure-sensitive adhesive layer and a pressure-sensitive adhesive composition for forming the second pressure-sensitive adhesive layer is 50,000 mPa·s or less.

In one embodiment, the second pressure-sensitive adhesive layer includes at least two portions having different pressure-sensitive adhesive strengths including a strong pressure-sensitive adhesive portion and a weak pressure-sensitive adhesive portion.

In one embodiment, a difference in pressure-sensitive adhesive strength to a stainless-steel plate between the strong pressure-sensitive adhesive portion and the weak pressure-sensitive adhesive portion is from 1 N/25 mm to 10 N/25 mm.

According to another aspect of the present invention, there is provided a method of producing a pressure-sensitive adhesive tape including a base material including an olefin-based resin, a first pressure-sensitive adhesive layer including an olefin-based resin, and a second pressure-sensitive adhesive layer including a styrene-based elastomer in the stated order. The production method includes: applying a pressure-sensitive adhesive composition for forming the first pressure-sensitive adhesive layer to the base material by hot-melt coating; and applying a pressure-sensitive adhesive composition for forming the second pressure-sensitive adhesive layer to the first pressure-sensitive adhesive layer by hot-melt coating.

In one embodiment, the production method includes simultaneously applying the pressure-sensitive adhesive composition for forming the first pressure-sensitive adhesive layer and the pressure-sensitive adhesive composition for forming the second pressure-sensitive adhesive layer by hot-melt coating.

In one embodiment, the second pressure-sensitive adhesive layer includes at least two portions having different pressure-sensitive adhesive strengths including a strong pressure-sensitive adhesive portion and a weak pressure-sensitive adhesive portion, and the production method includes applying the pressure-sensitive adhesive compositions for forming the respective portions by pattern coating.

### Advantageous Effects of Invention

According to the embodiment of the present invention, there can be provided the pressure-sensitive adhesive tape in which anchoring failure is suppressed. Thus, the pressure-sensitive adhesive tape may be a pressure-sensitive adhesive tape including a pressure-sensitive adhesive layer having a high pressure-sensitive adhesive strength. In addition, even when the pressure-sensitive adhesive tape is a pressure-sensitive adhesive tape including a pressure-sensitive adhesive layer that may be increased in pressure-sensitive adhesive strength during storage, anchoring failure at the time of peeling can be suppressed. Thus, the pressure-sensitive adhesive tape can be suitably used also for applications in which bonding and peeling are repeated.

### Brief Description of Drawings

FIG. **1A** is a schematic sectional view of a pressure-sensitive adhesive tape according to one embodiment of the present invention.
FIG. **1B** is a schematic sectional view of a pressure-sensitive adhesive tape according to another embodiment of the present invention.
FIG. **1C** is a schematic sectional view of a pressure-sensitive adhesive tape according to still another embodiment of the present invention.
FIG. **2** is a schematic sectional view for illustrating a usage mode of the pressure-sensitive adhesive tape illustrated in FIG. **1B****.**

### Description of Embodiments

### A. Overall Configuration of Pressure-sensitive Adhesive Tape

A pressure-sensitive adhesive tape according to an embodiment of the present invention includes a base material including an olefin-based resin, a first pressure-sensitive adhesive layer including an olefin-based resin (hereinafter also referred to as "olefin-based pressure-sensitive adhesive layer"), and a second pressure-sensitive adhesive layer including a styrene-based elastomer (hereinafter also referred to as "styrene-based pressure-sensitive adhesive layer") in the stated order. When the pressure-sensitive adhesive tape includes the first pressure-sensitive adhesive layer and the second pressure-sensitive adhesive layer in the stated order, there can be provided a pressure-sensitive adhesive tape having excellent storage stability and suppressed anchoring failure. In a pressure-sensitive adhesive tape including a pressure-sensitive adhesive layer including a styrene-based elastomer, its pressure-sensitive adhesive strength is increased during storage, and as a result, anchoring failure between the base material and the pressure-sensitive adhesive layer may occur. The pressure-sensitive adhesive tape according to the embodiment of the present invention includes a pressure-sensitive adhesive layer including an olefin-based resin between the base material including an olefin-based resin and the pressure-sensitive adhesive layer including a styrene-based elastomer. With such configuration, even when the pressure-sensitive adhesive tape is stored in a state of being bonded to an adherend, anchoring failure between the base material and the pressure-sensitive adhesive layer at the time of peeling can be suppressed. Thus, the pressure-sensitive adhesive tape can be bonded again to be used. Accordingly, the pressure-sensitive adhesive tape can be suitably used as a sealing material for resealing in which sealing and unsealing are repeatedly performed.

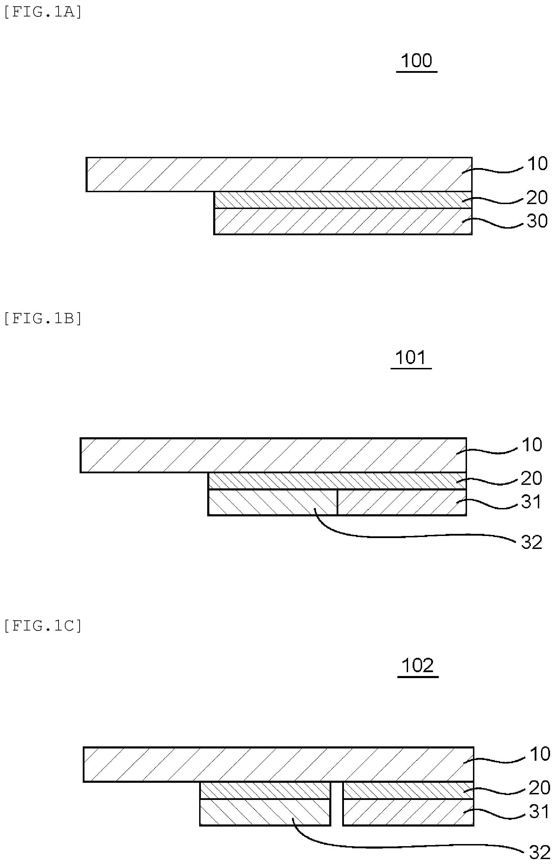

The above-mentioned first pressure-sensitive adhesive layer and second pressure-sensitive adhesive layer may be formed on the entirety of one surface of the base material or may be formed only on a part thereof. FIG. **1A** is a schematic sectional view of the pressure-sensitive adhesive tape according to one embodiment of the present invention. A pressure-sensitive adhesive tape **100** illustrated in FIG. **1A** includes a base material **10,** a first pressure-sensitive adhesive layer **20** including an olefin-based resin, and a second pressure-sensitive adhesive layer **30** including a styrene-based elastomer. In the illustrated example, the first pressure-sensitive adhesive layer **20** and the second pressure-sensitive adhesive layer **30** are each formed on a part of the base material. An extending portion of the base material **10** extending in a plane direction from the first pressure-sensitive adhesive layer **20** and the second pressure-sensitive adhesive layer **30** can be used as a handle portion when the pressure-sensitive adhesive tape **100** is used.

In one embodiment, the second pressure-sensitive adhesive layer of the above-mentioned pressure-sensitive adhesive tape includes at least two portions having different pressure-sensitive adhesive strengths including a strong pressure-sensitive adhesive portion and a weak pressure-sensitive adhesive portion. In the pressure-sensitive adhesive tape according to the embodiment of the present invention, even when the second pressure-sensitive adhesive layer to be brought into contact with an adherend includes the portions having different pressure-sensitive adhesive strengths, anchoring failure can be suppressed. Thus, the pressure-sensitive adhesive tape may be, for example, a pressure-sensitive adhesive tape including a portion having a pressure-sensitive adhesive strength adjusted in accordance with the surface characteristics of a bonding portion of the adherend. In one embodiment, the pressure-sensitive adhesive tape includes a strong pressure-sensitive adhesive portion having a higher pressure-sensitive adhesive strength and a weak pressure-sensitive adhesive portion having a pressure-sensitive adhesive strength lower than that of the strong pressure-sensitive adhesive portion. A pressure-sensitive adhesive tape **101** illustrated in FIG. **1B** includes the base material **10,** the first pressure-sensitive adhesive layer **20,** a strong pressure-sensitive adhesive portion **31,** and a weak pressure-sensitive adhesive portion **32.** In the illustrated example, one strong pressure-sensitive adhesive portion and one weak pressure-sensitive adhesive portion are formed, but two or more strong pressure-sensitive adhesive portions and/or two or more weak pressure-sensitive adhesive portions may be formed depending on the application. In addition, the second pressure-sensitive adhesive layer may be formed through use of three or more pressure-sensitive adhesive compositions having different pressure-sensitive adhesive strengths. The strong pressure-sensitive adhesive portion and the weak pressure-sensitive adhesive portion may be formed continuously on the base material or may be formed with any appropriate gap therebetween. A pressure-sensitive adhesive tape **102** illustrated in FIG. **1C** includes the base material **10,** the first pressure-sensitive adhesive layer **20,** the strong pressure-sensitive adhesive portion **31,** and the weak pressure-sensitive adhesive portion **32.** In the illustrated example, the pressure-sensitive adhesive tape **102** has a gap between the strong pressure-sensitive adhesive portion **31** and the weak pressure-sensitive adhesive portion **32.** With such configuration, there can be provided a pressure-sensitive adhesive tape in which a pressure-sensitive adhesive layer is formed only on a required portion in accordance with a bonding portion of an adherend. In addition, the strong pressure-sensitive adhesive portion and the weak pressure-sensitive adhesive portion may be formed into a pattern. For example, the strong pressure-sensitive adhesive portion and the weak pressure-sensitive adhesive portion may be arranged in a stripe pattern, a checkered pattern, or a dot pattern. The typical arrangement is a stripe pattern in which the strong pressure-sensitive adhesive portion and the weak pressure-sensitive adhesive portion are alternately arranged. In the illustrated example, the first pressure-sensitive adhesive layer **20** is formed only between each of the strong pressure-sensitive adhesive portion **31** and the weak pressure-sensitive adhesive portion **32,** and the base material **10,** but the first pressure-sensitive adhesive layer **20** may be formed in the gap portion. In practical use, a release liner is releasably and temporarily bonded to the pressure-sensitive adhesive layer until use.

The thickness of the olefin-based pressure-sensitive adhesive layer is preferably from 5 µm. to 30 um. The thickness of the olefin-based pressure-sensitive adhesive layer is more preferably 10 µm or more, still more preferably 15 µm or more. In addition, the thickness of the olefin-based pressure-sensitive adhesive layer is more preferably 25 um or less, still more preferably 20 pm or less. When the thickness of the olefin-based pressure-sensitive adhesive layer falls within the above-mentioned ranges, there can be provided a pressure-sensitive adhesive tape having suppressed anchoring failure even when the pressure-sensitive adhesive strength of the second pressure-sensitive adhesive layer is high.

The thickness of the styrene-based pressure-sensitive adhesive layer is preferably from 5 um to 50 um. The thickness of the styrene-based pressure-sensitive adhesive layer is more preferably 10 µm or more, still more preferably 15 µm or more. In addition, the thickness of the styrene-based pressure-sensitive adhesive layer is more preferably 40 um or less, still more preferably 30 um or less, yet still more preferably 25 um or less, particularly preferably 20 µm or less. When the thickness of the styrene-based pressure-sensitive adhesive layer falls within the above-mentioned ranges, an appropriate pressure-sensitive adhesive property to an adherend can be exhibited.

The pressure-sensitive adhesive strength to a stainless-steel plate of the styrene-based pressure-sensitive adhesive layer (that is, the pressure-sensitive adhesive strength of the pressure-sensitive adhesive tape) is preferably from 0.05 N/25 mm to 15 N/25 mm. The pressure-sensitive adhesive strength of the styrene-based pressure-sensitive adhesive layer is more preferably from 10 N/25 mm or less, still more preferably 6 N/25 mm or less, particularly preferably 4 N/25 mm or less. The pressure-sensitive adhesive strength to a stainless-steel plate of the styrene-based pressure-sensitive adhesive layer is more preferably 0.1 N/25 mm or more, still more preferably 0.2 N/25 mm or more, yet still more preferably 0.3 N/25 mm or more, yet still more preferably 0.5 N/25 mm or more, yet still more preferably 1 N/25 mm or more, particularly preferably 2 N/25 mm or more, most preferably 3 N/25 mm or more. When the pressure-sensitive adhesive strength to a stainless-steel plate falls within the above-mentioned ranges, an appropriate pressure-sensitive adhesive strength to the adherend can be exhibited. The term "pressure-sensitive adhesive strength to a stainless-steel plate" as used herein refers to a value measured by performing a 90° peeling test at a peel rate of 300 mm/min with respect to a SUS plate. The pressure-sensitive adhesive strength of a pressure-sensitive adhesive tape is usually defined with the width of a tape used as a sample. Thus, the pressure-sensitive adhesive strength may be appropriately converted based on the width of the pressure-sensitive adhesive tape.

The difference between the melt viscosity at 160°C of a pressure-sensitive adhesive composition for forming the olefin-based pressure-sensitive adhesive layer and the melt viscosity at 160°C of a pressure-sensitive adhesive composition for forming the styrene-based pressure-sensitive adhesive layer is preferably 50,000 mPa·s or less, more preferably 40,000 mPa·s or less, still more preferably 30,000 mPa·s or less, particularly preferably 20,000 mPa·s or less, most preferably 10,000 mPa·s or less. The difference in melt viscosity at 160°C between the pressure-sensitive adhesive composition for forming the olefin-based pressure-sensitive adhesive layer and the pressure-sensitive adhesive composition for forming the styrene-based pressure-sensitive adhesive layer is preferably as small as possible, and is, for example, 0 mPa·s or more, preferably from 0 mPa·s to 5,000 mPa·s. When the difference in melt viscosity at 160°C between the pressure-sensitive adhesive composition for forming the olefin-based pressure-sensitive adhesive layer and the pressure-sensitive adhesive composition for forming the styrene-based pressure-sensitive adhesive layer falls within the above-mentioned ranges, the olefin-based pressure-sensitive adhesive layer and the styrene-based pressure-sensitive adhesive layer can be simultaneously formed by simultaneously applying the compositions through hot-melt coating. The term "melt viscosity at 160°C" as used herein refers to a melt viscosity measured at 160°C with a viscometer (for example, Model: DVE Viscometer, spindle: LV, manufactured by AMETEK Brookfield).

When the second pressure-sensitive adhesive layer includes at least two portions having different pressure-sensitive adhesive strengths, the difference in pressure-sensitive adhesive strength between the respective portions may be set to any appropriate value depending on the application or the like. The difference in pressure-sensitive adhesive strength to a stainless-steel plate between the portions having different pressure-sensitive adhesive strengths is preferably from 1 N/25 mm to 10 N/25 mm. The difference in pressure-sensitive adhesive strength between the portions having different pressure-sensitive adhesive strengths is more preferably 1.5 N/25 mm or more, still more preferably 2 N/25 mm or more, yet still more preferably 2.5 N/25 mm or more, yet still more preferably 3 N/25 mm or more, particularly preferably 4 N/25 mm or more, most preferably 4.5 N/25 mm or more. In addition, the difference in pressure-sensitive adhesive strength to a stainless-steel plate between the portions having different pressure-sensitive adhesive strengths is more preferably 9 N/25 mm or less, still more preferably 8 N/25 mm or less. When the difference in pressure-sensitive adhesive strength falls within the above-mentioned ranges, there can be provided a pressure-sensitive adhesive tape having an easy unsealing property. The pressure-sensitive adhesive strength to a stainless-steel plate is as described above.

The pressure-sensitive adhesive tape (total thickness) may be set to any appropriate thickness. For example, the thickness is from 20 um to 200 µm, preferably from 30 um to 150 µm, more preferably from 40 um to 130 um. When the thickness of the pressure-sensitive adhesive tape falls within the above-mentioned ranges, the pressure-sensitive adhesive tape can be suitably used for various applications.

Each of constituent members is described below in detail.

### B. Base Material

The base material is a resin base material including an olefin-based resin. Any appropriate olefin-based resin may be used as the olefin-based resin. Specific examples thereof include a homopolymer and a copolymer of two or more kinds of olefins. The olefin is preferably an olefin having 2 to 20 carbon atoms. Examples of such α-olefin include ethylene, propylene, 1-butene, 1-pentene, 1-hexene, 1-heptene, 1-octene, and 4-methyl-1-pentene. The propylene-based resin is preferably used because the propylene-based resin can provide physical properties suitable for the pressure-sensitive adhesive tape, such as breaking strength and elongation difficulty, and is low in cost and can be stably supplied. The propylene-based resin may be homopolypropylene, block polypropylene, or random polypropylene. The olefin-based resins may be used alone or in combination thereof.

The content of the propylene-based resin in the olefin-based resin is preferably from 40 wt% to 100 wt%. The content of the propylene-based resin in the olefin-based resin is more preferably 50 wt% or more, still more preferably 80 wt% or more, particularly preferably 85 wt% or more, most preferably 90 wt% or more. In one embodiment, the content of the propylene-based resin is more preferably 95 wt% or less, still more preferably 90 wt% or less. When the content of the propylene-based resin falls within the above-mentioned ranges, there can be provided a pressure-sensitive adhesive tape having physical properties suitable for the pressure-sensitive adhesive tape, such as breaking strength and elongation difficulty. In still another embodiment of the present invention, the content of the propylene-based resin is preferably from 90 wt% to 100 wt%. When the content of the propylene-based resin falls within the above-mentioned ranges, the anchoring failure of the pressure-sensitive adhesive tape can be further suppressed.

The base material may include any appropriate resin except the olefin-based resin. Examples of the resin except the olefin-based resin include: a synthetic rubber-based resin, such as a styrene-isoprene block copolymer (SIS) or a styrene-butadiene block copolymer (SBS); a polyester-based resin such as polyethylene terephthalate (PET); and a polyamide-based resin. Those resins are used in an amount of less than 50 wt% with respect to 100 wt% of the resins included in the base material.

The base material may include any appropriate other component in addition to the resin. Examples thereof include additives, such as an antioxidant, a UV absorber, a light stabilizer, a fluorescent agent, and a colorant. Those additives may each be used in any appropriate amount.

The surface of the base material on which the pressure-sensitive adhesive layer is formed may be subjected to surface treatment such as corona discharge treatment. In addition, the surface of the base material on the opposite side to the surface on which the pressure-sensitive adhesive layer is formed may be subjected to release treatment. Because of the release treatment, sticking between the base material and the pressure-sensitive adhesive layer in a state in which the pressure-sensitive adhesive tapes overlap each other can be prevented, and the tape can be stored in a roll form. The release treatment may be performed by any appropriate method. For example, the release treatment may be performed by applying a silicone-based release agent.

The thickness of the base material may be set to any appropriate thickness. The thickness of the base material is, for example, from 10 um to 100 µm, preferably from 20 um to 90 um, more preferably from 30 um to 80 µm.

### C. First Pressure-sensitive Adhesive Layer

The first pressure-sensitive adhesive layer is formed of a pressure-sensitive adhesive composition containing an olefin-based resin. The pressure-sensitive adhesive composition containing an olefin-based resin is a hot-melt pressure-sensitive adhesive. The pressure-sensitive adhesive composition containing an olefin-based resin contains an olefin-based resin and a tackifier.

### C-1. Olefin-based Resin

Any appropriate olefin-based resin may be used as the olefin-based resin. Preferred examples of the olefin-based resin include a homopolymer of an α-olefin, and a copolymer of two or more kinds of α-olefins. The α-olefin is preferably an α-olefin having 2 to 20 carbon atoms. Examples of such α-olefin include ethylene, propylene, 1-butene, 1-pentene, 1-hexene, 1-heptene, 1-octene, and 4-methyl-1-pentene. An olefin-based resin containing propylene as the α-olefin is preferably used.

In one embodiment, the olefin-based resin containing propylene has a propylene ratio of preferably 40 wt% or more, more preferably 50 wt% or more, still more preferably 75 wt% or more, particularly preferably 85 wt% or more. The propylene ratio of the olefin-based resin containing propylene is most preferably from 85 wt% to 100 wt%. The propylene ratio in the olefin-based resin may be 100 wt%, that is, the olefin-based resin may be a propylene homopolymer. When the propylene ratio falls within the above-mentioned ranges, the adhesiveness between the base material and the first pressure-sensitive adhesive layer can be further improved. In addition, for example, when a propylene-based resin is used as the base material, an improving effect on the adhesiveness can be further exhibited. The term "propylene ratio" as used herein refers to a content ratio of a propylene unit in constituent units included in a copolymer.

In one embodiment, the olefin-based resin to be used in the pressure-sensitive adhesive composition for forming the first pressure-sensitive adhesive layer preferably has a low melting point. The melting point of the olefin-based resin is, for example, 120°C or less, preferably 110°C or less. The term "melting point" as used herein refers to the temperature of the highest endothermic peak obtained by differential scanning calorimetry (DSC). In one embodiment, the olefin-based resin to be used in the pressure-sensitive adhesive composition for forming the first pressure-sensitive adhesive layer preferably has a small weight-average molecular weight. For example, an olefin-based resin having a weight-average molecular weight of from 10,000 to 500,000 is used as the olefin-based resin. In one embodiment, the olefin-based resin to be used in the pressure-sensitive adhesive composition for forming the first pressure-sensitive adhesive layer preferably has a low density. For example, the density of the olefin-based resin is 0.90 g/cm³ or less.

The content of the olefin-based resin in the olefin-based pressure-sensitive adhesive composition is preferably from 20 wt% to 70 wt%, more preferably from 25 wt% to 65 wt%, still more preferably from 30 wt% to 60 wt%, particularly preferably from 40 wt% to 60 wt%.

A commercially available product may be used as the olefin-based resin. Examples of such commercially available product include: some products of "REXtac" (trademark) series (e.g., REXtac RT2788 and REXtac RT2730) available from REXtac, LLC; and some products of "Vistamaxx" series (e.g., Vistamaxx 8780 and Vistamaxx 8380) available from Exxon Mobil Corporation.

### C-2. Tackifier

Any appropriate resin may be used as the tackifier. Specific examples thereof include: a natural resin, such as a terpene-based resin or a rosin resin; and a synthetic resin, such as a petroleum resin, a hydrogenated petroleum resin, a styrene-based resin, a coumarone-indene-based resin, a phenol-based resin, or a xylene-based resin. Examples of the petroleum resin include an aliphatic petroleum resin, an alicyclic petroleum resin, an aromatic petroleum resin, a copolymer petroleum resin of an alicyclic component and an aromatic component, and a copolymer petroleum resin of an alicyclic component and an aliphatic component. Of those, a hydrogenated petroleum resin is preferably used. Through use of the hydrogenated petroleum resin, the compatibility with the olefin-based resin is improved, and as a result, the heating stability of the hot-melt pressure-sensitive adhesive composition can be improved. The tackifiers may be used alone or in combination thereof.

The content of the tackifier is preferably from 2 wt% to 60 wt% with respect to 100 wt% of the olefin-based pressure-sensitive adhesive composition. The olefin-based pressure-sensitive adhesive composition contains more preferably 50 wt% or less, still more preferably 45 wt% or less, particularly preferably 40 wt% or less of the tackifier. When the content of the tackifier falls within the above-mentioned ranges, there can be provided a pressure-sensitive adhesive composition capable of forming a pressure-sensitive adhesive layer having a sufficient initial pressure-sensitive adhesive strength. When the content of the tackifier is more than 60 wt%, an adhesive residue may occur on an adherend. In addition, the adherend may be damaged at the time of peeling. In addition, the hot-melt pressure-sensitive adhesive composition contains preferably 25 wt% or more, more preferably 30 wt% or more, still more preferably 35 wt% or more of the tackifier. When the content of the tackifier falls within the above-mentioned ranges, a hot-melt pressure-sensitive adhesive composition having an appropriate pressure-sensitive adhesive strength to an adherend can be obtained. In one embodiment, the content of the tackifier is preferably from 35 wt% to 45 wt% with respect to 100 wt% of the olefin-based pressure-sensitive adhesive composition.

### C-3. Other Components

The hot-melt pressure-sensitive adhesive of the present invention may contain any appropriate other components to the extent that the effects of the present invention are not impaired. Examples of such other components include liquid paraffin, an antioxidant, a UV absorber, a light stabilizer, a fluorescence agent, and a colorant. Such other components may be used alone or in combination thereof. The contents of the other components are used so that the contents of the olefin-based resin and the tackifier fall within the above-mentioned ranges.

### D. Second Pressure-sensitive Adhesive Layer

The second pressure-sensitive adhesive layer is formed of a pressure-sensitive adhesive composition containing a styrene-based elastomer. The pressure-sensitive adhesive composition containing a styrene-based elastomer is a hot-melt pressure-sensitive adhesive. The pressure-sensitive adhesive composition containing a styrene-based elastomer contains a styrene-based elastomer and a tackifier.

In one embodiment, the second pressure-sensitive adhesive layer (substantially, the pressure-sensitive adhesive composition containing a styrene-based elastomer) has a storage elastic modulus G' at 25°C of preferably 0.2 MPa or less, more preferably 0.15 MPa or less, still more preferably 0.12 MPa or less, particularly preferably 0.1 MPa or less. When the storage elastic modulus G' at 25°C falls within the above-mentioned ranges, a pressure-sensitive adhesive composition that is more excellent in adhesive property is obtained. The storage elastic modulus G' at 25°C is preferably 0.01 MPa or more. The storage elastic modulus of the second pressure-sensitive adhesive layer may be set to any appropriate value depending on the adherend of the pressure-sensitive adhesive tape. In one embodiment, the storage elastic modulus of the second pressure-sensitive adhesive layer is preferably from 0.12 MPa to 0.16 MPa. In addition, in another embodiment, the storage elastic modulus is preferably from 0.05 MPa to 0.08 MPa. The storage elastic modulus G' (25°C) of the pressure-sensitive adhesive layer may be determined by dynamic viscoelastic measurement. Specifically, a disc-shaped sample having a thickness of about 1 mm and a diameter of 7.9 mm is produced by any appropriate method through use of a pressure-sensitive adhesive layer (pressure-sensitive adhesive sheet in the case of a pressure-sensitive adhesive sheet free of a base material) to be measured. The storage elastic modulus G' (25°C) may be determined by sandwiching and fixing this sample between parallel plates, and performing the dynamic viscoelastic measurement with a viscoelasticity tester (for example, product name: DISCOVERY HR-3 HYBRID RHEOMETER, manufactured by TA Instruments Japan Inc. or its equivalent) under the following conditions.
·Measurement mode: shear mode
·Temperature range: -40°C to 120°C
·Temperature increase rate: 3°C/min
·Measurement frequency: 1.6 Hz

### D-1. Styrene-based Elastomer

The hot-melt pressure-sensitive adhesive composition contains preferably 2 wt% to 80 wt% of the styrene-based elastomer with respect to 100 wt% of the hot-melt pressure-sensitive adhesive composition. The styrene-based pressure-sensitive adhesive composition contains more preferably 10 wt% to 75 wt%, still more preferably 20 wt% to 70 wt%, particularly preferably 30 wt% to 65 wt%, most preferably 40 wt% to 60 wt% of the styrene-based elastomer. When the content of the styrene-based elastomer falls within the above-mentioned ranges, there can be provided a pressure-sensitive adhesive composition having a sufficient initial pressure-sensitive adhesive strength.

The styrene content of the styrene-based elastomer may be set to any appropriate value. The styrene content of the styrene-based elastomer is preferably 10 wt% or more, more preferably 12 wt% or more, still more preferably 14 wt% or more. When the styrene content of the styrene-based elastomer is less than 10 wt%, the initial pressure-sensitive adhesive strength may become excessively high, and an adhesive residue may occur at the time of peeling. The styrene content of the styrene-based elastomer is preferably 25 wt% or less, more preferably 20 wt% or less, still more preferably 18 wt% or less. When the styrene content of the styrene-based elastomer is more than 25 wt%, the pressure-sensitive adhesive strength may be increased excessively with time.

The melt flow rate (MFR) of the styrene-based elastomer is preferably from 5 g/10 min to 40 g/10 min, more preferably from 10 g/10 min to 30 g/10 min, still more preferably from 20 g/10 min to 30 g/10 min. When the MFR falls within the above-mentioned ranges, the applicability of the hot-melt pressure-sensitive adhesive composition can be improved and a pressure-sensitive adhesive layer can be satisfactorily formed by hot-melt coating to be described later. The term "MFR" as used herein refers to a value measured by the method described in ISO 1133 under the conditions of 200°C and 5 kg.

Any appropriate elastomer may be used as the styrene-based elastomer. Examples thereof include a styrene-isoprene block copolymer (SIS), a styrene-butadiene block copolymer (SBS), a styrene-ethylene-butylene block copolymer (SEES), a styrene-ethylene-propylene block copolymer (SEPS), a styrene-ethylene-ethylene-propylene block copolymer (SEEPS), and a styrene-butadiene-butene-styrene block copolymer (SBBS). Those styrene-based elastomers may be used alone or in combination thereof. Of those, a styrene-isoprene block copolymer (hereinafter also referred to as "SIS") may be preferably used.

The SIS preferably contains a diblock copolymer. When the SIS contains the diblock copolymer, the initial pressure-sensitive adhesive strength can be adjusted to an appropriate value, and the wettability of the pressure-sensitive adhesive composition can also be improved.

The content of the SIS diblock copolymer in the SIS is preferably 5 wt% or more, more preferably 10 wt% or more, still more preferably 30 wt% or more. When the content of the SIS diblock copolymer falls within the above-mentioned ranges, the initial pressure-sensitive adhesive strength can be adjusted to an appropriate value, and the wettability of the pressure-sensitive adhesive composition can also be improved. The content of the SIS diblock copolymer in the SIS is preferably 80 wt% or less, more preferably 50 wt% or less, still more preferably 40 wt% or less, particularly preferably 35 wt% or less. When the content of the SIS diblock copolymer falls within the above-mentioned ranges, an adhesive residue on an adherend can be prevented.

### D-2. Tackifier

The pressure-sensitive adhesive composition containing a styrene-based elastomer contains preferably 2 wt% to 40 wt% of a tackifier. The pressure-sensitive adhesive composition containing a styrene-based elastomer contains more preferably 30 wt% or less, still more preferably 20 wt% or less, particularly preferably 10 wt% or less, most preferably 8 wt% or less of the tackifier. When the content of the tackifier falls within the above-mentioned ranges, there can be provided a pressure-sensitive adhesive composition capable of forming a pressure-sensitive adhesive layer having a sufficient initial pressure-sensitive adhesive strength. When the content of the tackifier is more than 40 wt%, an adhesive residue may occur on an adherend. In addition, the adherend may be damaged at the time of peeling. In addition, the pressure-sensitive adhesive composition containing a styrene-based elastomer contains preferably 4 wt% or more, more preferably 6 wt% or more of the tackifier. When the content of the tackifier falls within the above-mentioned ranges, there can be obtained a hot-melt pressure-sensitive adhesive composition having an appropriate pressure-sensitive adhesive strength to an adherend.

Any appropriate resin may be used as the tackifier. Specific examples of thereof include: a natural resin, such as a terpene-based resin or a rosin resin; and a synthetic resin, such as a petroleum resin, a hydrogenated petroleum resin, a styrene-based resin, a coumarone-indene-based resin, a phenol-based resin, or a xylene-based resin. Examples of the petroleum resin include an aliphatic petroleum resin, an alicyclic petroleum resin, an aromatic petroleum resin, a copolymer petroleum resin of an alicyclic component and an aromatic component, and a copolymer petroleum resin of an alicyclic component and an aliphatic component. Of those, a hydrogenated petroleum resin is preferably used. Through use of the hydrogenated petroleum resin, the compatibility with the styrene-based elastomer and the olefin-based elastomer is improved, and as a result, the heating stability of the hot-melt pressure-sensitive adhesive composition can be improved. The tackifiers may be used alone or in combination thereof.

In one embodiment, the pressure-sensitive adhesive composition preferably contains a tackifier having a softening point of less than 90°C (hereinafter also referred to as "tackifierᵤ₉₀"). Through use of the tackifierᵤ₉₀, the pressure-sensitive adhesive strength of the pressure-sensitive adhesive composition can be improved. The softening point of the tackifierᵤ₉₀ may be room temperature or less. The tackifiers_{U90} may be used alone or in combination thereof. The tackifiers_{U90} are preferably used in combination thereof. When the tackifiers_{U90} are in combination thereof, the pressure-sensitive adhesive strength of the pressure-sensitive adhesive composition can be further improved.

The softening point of the tackifier is defined as a value measured based on a softening point test method (ring and ball method) specified in JIS K5902 and JIS K2207. Specifically, a sample is quickly melted at the lowest possible temperature and carefully filled into a ring placed on a flat metal plate so as to avoid the formation of bubbles. After the sample is cooled down, a portion of the sample raised above the plane including an upper edge of the ring is cut away with a slightly heated knife. Next, a support (ring base) is placed in a glass container (heating bath) having a diameter of 85 mm or more and a height of 127 mm or more, and glycerin is poured thereinto to a depth of 90 mm or more. A steel ball (diameter: 9.5 mm, weight: 3.5 g) and the ring filled with the sample are immersed in glycerin without being brought into contact with each other, and the temperature of the glycerin is kept at 20°C±5°C for 15 minutes. Then, the steel ball is placed at the center of the surface of the sample in the ring, and the whole is placed at a fixed position on the support. The distance from the upper edge of the ring to the glycerin surface is kept at 50 mm. A thermometer is placed so that the position of the center of a mercury ball of the thermometer is set to the same height as the center of the ring, and the container is heated. The flame of a Bunsen burner to be used for heating is directed so as to be applied to a middle position between the center and rim of the bottom of the container to ensure even heating. The rate at which the bath temperature is increased after reaching 40°C from the start of heating is required to be 5.0°C±0.5°C per minute. The sample is gradually softened to flow down from the ring, and the temperature at which the sample finally touches the bottom plate is read and defined as the softening point. The softening point is measured by using two or more rings simultaneously, and an average value thereof is adopted.

Of the tackifiers exemplified above, a tackifier having a softening point of less than 90°C may be used as the tackifierᵤ₉₀. The tackifierᵤ₉₀ preferably contains a hydrocarbon-based resin.

Examples of the hydrocarbon-based resin that may be preferably adopted as the tackifierᵤ₉₀ include various hydrocarbon-based resins, such as an aliphatic hydrocarbon resin, an aromatic hydrocarbon resin, an aliphatic cyclic hydrocarbon resin, an aliphatic-aromatic petroleum resin (e.g., a styrene-olefin-based copolymer), an aliphatic-alicyclic petroleum resin, a hydrogenated hydrocarbon resin, a coumarone resin, and a coumarone-indene resin. A hydrogenated hydrocarbon-based resin is more preferably used. The hydrocarbon-based resins may be used alone or in combination thereof.

The tackifier_{U90} may contain another tackifier in addition to the hydrocarbon-based resin. Of the tackifiers exemplified above, any appropriate tackifier having a softening point of less than 90°C may be used as the other tackifier. The other tackifiers may be used alone or in combination thereof. The tackifierᵤ₉₀ may contain, for example, a hydrocarbon-based resin and a terpene resin.

The tackifier may contain two or more kinds of the tackifiers_{U90} and at least one kind of tackifier having a softening point of 90°C or more in combination. When the tackifier contains a tackifier having a softening point of 90°C or more, the cohesive strength of the pressure-sensitive adhesive composition can be improved.

As the tackifier having a softening point of 90°C or more, any appropriate tackifier may be selected from the tackifiers each having a softening point of 90°C or more among the tackifiers exemplified above. The tackifiers each having a softening point of 90°C or more may be used alone or in combination thereof. The tackifier having a softening point of 90°C or more may contain at least one kind selected from a hydrocarbon-based resin and a terpene-based tackifying resin (e.g., a terpene phenol resin).

When two or more kinds of the tackifiers_{U90} and at least one kind of the tackifier having a softening point of 90°C or more are used, the total content of the tackifiers is preferably 30 parts by weight or more, more preferably 35 parts by weight or more, still more preferably 40 parts by weight or more, particularly preferably 45 parts by weight or more with respect to 100 parts by weight of the pressure-sensitive adhesive composition. When the total content of those tackifiers with respect to the pressure-sensitive adhesive composition falls within the above-mentioned ranges, a pressure-sensitive adhesive composition having a higher pressure-sensitive adhesive strength can be prepared. The total content of the tackifiers is preferably 70 parts by weight or less, more preferably 65 parts by weight or less, still more preferably 60 parts by weight or less with respect to 100 parts by weight of the pressure-sensitive adhesive composition.

When two or more kinds of the tackifiers_{U90} and at least one kind of the tackifier having a softening point of 90°C or more are used, the total content of the tackifiers_{U90} is preferably 50 wt% or more, more preferably 60 wt% or more, still more preferably 65 wt% or more with respect to the total content of the tackifiers. In addition, the total content of the tackifiers_{U90} is preferably 85 wt% or less, more preferably 80 wt% or less, still more preferably 75 wt% or less with respect to the total content of the tackifiers. When the total content of the tackifiers_{U90} with respect to the total content of the tackifiers falls within the above-mentioned ranges, the pressure-sensitive adhesive strength of the pressure-sensitive adhesive composition can be further improved.

### D-3. Oil

The pressure-sensitive adhesive composition containing a styrene-based elastomer preferably further contains an oil. When the pressure-sensitive adhesive composition containing a styrene-based elastomer contains the oil, its wettability can be improved. Any appropriate oil may be used as the oil. Examples thereof include a process oil, a naphthenic oil, a paraffinic oil, and a vulcanized oil. Of those, a paraffinic oil may be preferably used. The oils may be used alone or in combination thereof.

The oil may be used in any appropriate amount. The pressure-sensitive adhesive composition containing a styrene-based elastomer contains preferably 5 wt% to 30 wt% of the oil. The pressure-sensitive adhesive composition containing a styrene-based elastomer contains more preferably 25 wt% or less, still more preferably 20 wt% or less of the oil. When the content of the oil is high, an adhesive residue may occur on an adherend. The pressure-sensitive adhesive composition containing a styrene-based elastomer contains more preferably 5 wt% or more, still more preferably 10 wt% or more, particularly preferably 15 wt% or more of the oil. When the content of the oil falls within the above-mentioned ranges, there can be obtained a pressure-sensitive adhesive composition excellent in wettability.

### D-4. Olefin-based Elastomer

In one embodiment, the pressure-sensitive adhesive composition containing a styrene-based elastomer further contains an olefin-based elastomer. When the pressure-sensitive adhesive composition contains a styrene-based elastomer and an olefin-based elastomer, the pressure-sensitive adhesive strength to an adherend can be appropriately adjusted. For example, there can be formed a pressure-sensitive adhesive layer that achieves both a resealing property and an easy unsealing property and that is used for a sealing material for resealing. The pressure-sensitive adhesive composition containing a styrene-based elastomer contains preferably 2 wt% to 50 wt% of an olefin-based elastomer. The content of the olefin-based elastomer is more preferably 5 wt% or more, still more preferably 10 wt% or more, particularly preferably 15 wt% or more, most preferably 20 wt% or more. When the content of the olefin-based elastomer falls within the above-mentioned ranges, the pressure-sensitive adhesive strength to an adherend can be appropriately adjusted. For example, there can be provided a pressure-sensitive adhesive composition that can achieve both a resealing property and an easy unsealing property. The content of the olefin-based elastomer is preferably 40 wt% or less, more preferably 35 wt% or less, still more preferably 30 wt% or less. In one embodiment, the content of the olefin-based elastomer is preferably from 5 wt% to 25 wt%, more preferably from 10 wt% to 20 wt%. When the content of the olefin-based elastomer falls within the above-mentioned ranges, the initial pressure-sensitive adhesive strength can be adjusted to an appropriate value. Further, the heating stability of the pressure-sensitive adhesive composition can be improved.

The density of the olefin-based elastomer is preferably 0.830 g/cm³ or more, more preferably 0.835 g/cm³ or more, still more preferably 0.840 g/cm³ or more, particularly preferably 0.845 g/cm³ or more. In addition, the density of the olefin-based elastomer is preferably 0.890 g/cm³ or less, more preferably 0.885 g/cm³ or less, still more preferably 0.880 g/cm³ or less, particularly preferably 0.875 g/cm³ or less. When the density of the olefin-based elastomer falls within the above-mentioned ranges, there can be provided a pressure-sensitive adhesive composition that can achieve both a resealing property and an easy unsealing property.

The viscosity of the olefin-based elastomer at 190°C is preferably from 1,500 mPa·s to 6,500 mPa·s, more preferably from 2,000 mPa·s to 6,000 mPa·s, still more preferably from 3,000 mPa·s to 5,000 mPa·s. When the viscosity of the olefin-based elastomer falls within the above-mentioned ranges, a composition to be obtained can be suitably used as the hot-melt pressure-sensitive adhesive composition.

Any appropriate olefin-based elastomer may be used as the olefin-based elastomer. An α-olefin-based elastomer may be preferably used. A specific example of the α-olefin-based elastomer is at least one kind of elastomer selected from an ethylene-based elastomer, a propylene-based elastomer, and a 1-butene-based elastomer. The olefin-based elastomer may be a homopolymer of the α-olefin-based elastomer, a copolymer of two or more kinds of the α-olefin-based elastomers, or a copolymer of the α-olefin-based elastomer and another monomer component. The olefin-based elastomers may be used alone or in combination thereof. Of those, a propylene-based elastomer is preferred. Through use of the propylene-based elastomer, the heating stability of the hot-melt pressure-sensitive adhesive composition can be improved. The terms "ethylene-based elastomer," "propylene-based elastomer," and "1-butene-based elastomer" as used herein refer to elastomers containing, as main components, ethylene, propylene, and 1-butene, respectively. The term "main component" as used herein refers to a monomer component having the highest ratio among components for forming an elastomer.

In one embodiment, the propylene-based elastomer contains a copolymer of propylene and ethylene. When the propylene-based elastomer contains the copolymer of propylene and ethylene, the initial pressure-sensitive adhesive strength can be adjusted to an appropriate value. When the copolymer of propylene and ethylene is used as the propylene-based elastomer, the content ratio of ethylene in the propylene-based elastomer is preferably from 5 wt% to 20 wt%, more preferably from 7 wt% to 15 wt%. When the content ratio of ethylene in the propylene-based elastomer falls within the above-mentioned ranges, there can be provided a pressure-sensitive adhesive composition that can achieve both a resealing property and an easy unsealing property.

The softening point of the α-olefin-based elastomer is a softening point of preferably less than 100°C, more preferably 98°C or less, still more preferably 96°C or less. The softening point is, for example, 30°C or more. When the softening point falls within the above-mentioned ranges, a composition to be obtained can be suitably used as the hot-melt pressure-sensitive adhesive composition.

### D-5. Other Additive

The pressure-sensitive adhesive composition containing a styrene-based elastomer may further contain any appropriate other additive as required. Examples of the additive include an antioxidant, a UV absorber, a light stabilizer, a fluorescence agent, and a colorant. Those additives may be used alone or in combination thereof. The other additive is used in any appropriate amount within the range in which the effects of the present invention are obtained and a total of the above-mentioned styrene-based elastomer, tackifier, any appropriate olefin-based elastomer, and oil becomes 100 wt%.

As described above, in one embodiment, the second pressure-sensitive adhesive layer includes two or more portions having different pressure-sensitive adhesive strengths. As described above, when the olefin-based elastomer is further added to the pressure-sensitive adhesive composition containing a styrene-based elastomer, the pressure-sensitive adhesive strength to an adherend can be adjusted. Thus, for example, when the content ratio of the olefin-based elastomer in the pressure-sensitive adhesive composition for forming a portion having a low pressure-sensitive adhesive strength is set to be larger than that in the pressure-sensitive adhesive composition for forming a portion having a high pressure-sensitive adhesive strength, a difference in pressure-sensitive adhesive strength can be imparted. In addition, the portions having different pressure-sensitive adhesive strengths may be formed by adjusting the contents of the tackifiers in the pressure-sensitive adhesive compositions for forming the respective portions.

### E. Method of producing Pressure-sensitive Adhesive Tape

In one embodiment of the present invention, there is provided a method of producing a pressure-sensitive adhesive tape including a base material including an olefin-based resin, a first pressure-sensitive adhesive layer including an olefin-based resin, and a second pressure-sensitive adhesive layer including a styrene-based elastomer in the stated order. This production method includes: applying a pressure-sensitive adhesive composition for forming the first pressure-sensitive adhesive layer to the base material by hot-melt coating; and applying a pressure-sensitive adhesive composition for forming the second pressure-sensitive adhesive layer to the first pressure-sensitive adhesive layer by hot-melt coating. When the pressure-sensitive adhesive composition for forming the first pressure-sensitive adhesive layer and the pressure-sensitive adhesive composition for forming the second pressure-sensitive adhesive layer are applied to the base material by hot-melt coating, a plurality of pressure-sensitive adhesives, such as pressure-sensitive adhesives having different pressure-sensitive adhesive strengths, can be applied to form pressure-sensitive adhesive layers, and the options for the base material can be expanded because the base material is not influenced by the kind and melt viscosity of a pressure-sensitive adhesive. Further, the application of the pressure-sensitive adhesive composition can be performed without a solvent, and hence the burden on the environment can be reduced. In addition, it is easy to change the pressure-sensitive adhesive composition to be used. Thus, material loss at the time of design change is suppressed, and a wide variety of products are easily produced on one production line. Further, the pressure-sensitive adhesive composition for forming the first pressure-sensitive adhesive layer and the pressure-sensitive adhesive composition for forming the second pressure-sensitive adhesive layer can be easily applied in a relatively low temperature range of from about 140°C to about 160°C. Thus, the pressure-sensitive adhesive layer can be formed by hot-melt coating without adversely influencing the base material. The term "hot-melt coating" as used herein refers to a method involving discharging a pressure-sensitive adhesive composition in a molten state from a nozzle and applying the composition.

Regarding the first pressure-sensitive adhesive layer and the second pressure-sensitive adhesive layer, the second pressure-sensitive adhesive layer may be formed on the first pressure-sensitive adhesive layer after the first pressure-sensitive adhesive layer is formed on the base material. Alternatively, the pressure-sensitive adhesive composition for forming the first pressure-sensitive adhesive layer and the pressure-sensitive adhesive composition for forming the second pressure-sensitive adhesive layer may be simultaneously applied onto the base material. In one embodiment, the pressure-sensitive adhesive composition for forming the first pressure-sensitive adhesive layer and the pressure-sensitive adhesive composition for forming the second pressure-sensitive adhesive layer are simultaneously applied by hot-melt coating. The productivity can be improved by simultaneously applying the compositions through hot-melt coating. In addition, the anchoring property of the second pressure-sensitive adhesive layer to the first pressure-sensitive adhesive layer can be improved.

As described above, in one embodiment, the pressure-sensitive adhesive tape includes at least two portions having different pressure-sensitive adhesive strengths. Even when the second pressure-sensitive adhesive layer of the pressure-sensitive adhesive tape includes portions having different adhesive strengths, the first pressure-sensitive adhesive layer and the second pressure-sensitive adhesive layer, and the pressure-sensitive adhesive layer including at least two portions having different pressure-sensitive adhesive strengths can be simultaneously formed by hot-melt coating. The formation of the pressure-sensitive adhesive layers may be performed by any appropriate method. The pressure-sensitive adhesive layers may be simultaneously formed, for example, by subjecting the pressure-sensitive adhesive compositions to pattern coating through use of an apparatus including a plurality of slot applicators. Examples of such slot applicators include TrueCoat Slot Applicators (product name) manufactured by Nordson Corporation. For example, a pressure-sensitive adhesive tape having any appropriate gap formed between pressure-sensitive adhesive layers may be produced more easily by forming pressure-sensitive adhesive layers by pattern coating.

### F. Applications of Pressure-sensitive Adhesive Tape

The pressure-sensitive adhesive tape according to the embodiment of the present invention may be used for any appropriate applications. In one embodiment, the pressure-sensitive adhesive tape of the present invention can be used as a sealing material for resealing.

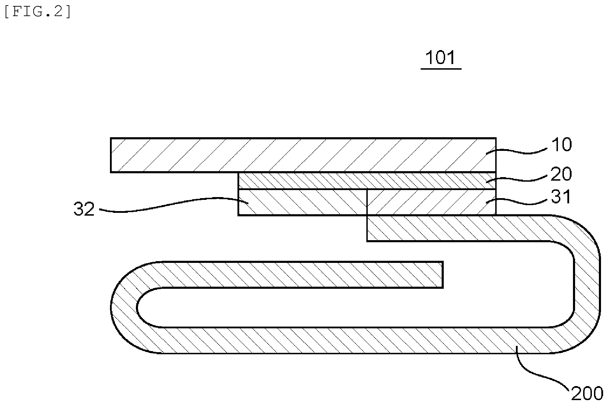

FIG. **2** is a schematic sectional view for illustrating a usage mode of the pressure-sensitive adhesive tape according to the embodiment of the present invention. In the illustrated example, there is illustrated a mode in which the pressure-sensitive adhesive tape **101** illustrated in FIG. **1B** is used as a sealing material for resealing on an adherend **200.** In the illustrated example, the pressure-sensitive adhesive tape **101** is fixed to the adherend **200** via the strong pressure-sensitive adhesive portion **31,** and the low pressure-sensitive adhesive portion **32** is bonded to the adherend **200** for resealing. The above-mentioned pressure-sensitive adhesive composition containing a styrene-based elastomer can achieve both a resealing property and an easy unsealing property by further containing an olefin-based elastomer. Thus, when the pressure-sensitive adhesive tape **101** is used as a sealing material for resealing, both the sealing property of the adherend **200** and the easy unsealing property thereof at the time of unsealing can be achieved.

In one embodiment, the pressure-sensitive adhesive tape can be suitably used as a sealing material for resealing. In one embodiment, the above-mentioned pressure-sensitive adhesive tape can be suitably used for a packaging material including a printed portion. The packaging material may include a printed portion in order to display required information. When the packaging material includes a printed portion, compositions of an ink used for printing and a paint (e.g., a lacquer) used for protecting a printed surface may affect the pressure-sensitive adhesive strength of the pressure-sensitive adhesive tape to increase the pressure-sensitive adhesive strength with time. As a result, the easy peeling property may not be obtained. This tendency may become more conspicuous when a nitrocellulose-based lacquer is applied to the printed surface. The pressure-sensitive adhesive tape according to the embodiment of the present invention can achieve both a resealing property and an easy unsealing property even when used for a packaging material including a printed surface to which a nitrocellulose-based lacquer is applied.

### Examples

The present invention is specifically described below by way of Examples. However, the present invention is not limited to these Examples. Evaluation methods in Examples and the like are as described below. In addition, the terms "part (s)" and "%" are "part (s) by weight" and "wt%", respectively, unless otherwise stated.

### [Example 1]

Materials shown in Table 1 were mixed to prepare pressure-sensitive adhesive compositions for forming a first pressure-sensitive adhesive layer and a second pressure-sensitive adhesive layer.

A non-stretched PP film (thickness: 80 um) subjected to release treatment on a surface opposite to a pressure-sensitive adhesive composition applied surface was used as a base material. The pressure-sensitive adhesive composition (pressure-sensitive adhesive composition containing an olefin-based resin) for forming the first pressure-sensitive adhesive layer and the pressure-sensitive adhesive composition (pressure-sensitive adhesive composition containing a styrene-based elastomer) for forming the second pressure-sensitive adhesive layer were simultaneously laminated and applied to a surface of the base material not subjected to release treatment through use of TrueCoat Slot Applicator (manufactured by Nordson Corporation) to provide a pressure-sensitive adhesive tape. An application temperature was 160°C, and a line speed was 100 m/min. The thickness of the first pressure-sensitive adhesive layer was 15 um, and the thickness of the second pressure-sensitive adhesive layer was 30 um. The following evaluations were performed through use of the resultant pressure-sensitive adhesive tapes.

**Table 1**

| | Olefin 1 |
|---|---|
| Olefin-based resin 1 | 59% |
| Tackifier | 40% |
| Antioxidant | 1% |

| | Olefin 2 |
|---|---|
| Olefin-based resin 2 | 59% |
| Tackifier | 40% |
| Antioxidant | 1% |

| | Olefin 3 |
|---|---|
| Olefin-based resin 3 | 59% |
| Tackifier | 40% |
| Antioxidant | 1% |

| | |
|---|---|
| Olefin-based resin 1 (manufactured by REXtac, LLC, product name: RT2788) Olefin-based resin 2 (manufactured by Exxon Mobil Corporation, product name: Vistamaxx 8780) Olefin-based resin 3 (manufactured by Eastman Chemical Company, product name: Eastoflex P1023PL) Tackifier (hydrogenated alicyclic petroleum resin, manufactured by Kolon Industries, Inc., product name: SUKOREZ SU-100S) Antioxidant (manufactured by BASF Japan Ltd., product name: Irganox 1010) | |

| | Styrene 1 | Styrene 2 | Styrene 3 | Styrene 4 | Styrene 5 |
|---|---|---|---|---|---|
| Styrene-based elastomer 1 | 64.0% | 60.0% | 51.5% | 48.2% | 44.6% |
| Tackifier 1 | 10.0% | 9.0% | 8.5% | 7.5% | 7.0% |
| Olefin-based resin 2 | 0.0% | 10.0% | 20.0% | 25.1% | 30.0% |
| Oil | 25.0% | 20.0% | 19.0% | 18.1% | 17.4% |
| Antioxidant | 1.0% | 1.0% | 1.0% | 1.0% | 1.0% |
| Storage elastic modulus G' [MPa] | - | 0.145 | - | - | - |

| | Styrene 6 | Styrene 7 | Styrene 8 | | |
|---|---|---|---|---|---|
| Styrene-based elastomer 1 | 19.4% | 40.0% | 42.7% | | |
| Styrene-based elastomer 2 | 19.4% | - | - | | |
| Tackifier 1 | 52.9% | - | - | | |
| Tackifier 2 | - | 28.0% | 30.0% | | |
| Tackifier 3 | - | 12.0% | 12.8% | | |
| Tackifier 4 | - | 8. 0% | 8.5% | | |
| Oil | 5.9% | 10.0% | 4.3% | | |
| Antioxidant | 2.4% | 2.0% | 1.7% | | |
| Storage elastic modulus G' [MPa] | - | 0.061 | 0.071 | | |

| | | | | | |
|---|---|---|---|---|---|
| Styrene-based elastomer 1 (SIS, manufactured by Kraton Polymers, product name: Kraton D1163, Si diblock: 38%, total content of styrene units: 15%) Styrene-based elastomer 2 (SIS, manufactured by Kraton Polymers, product name: Kraton D1113, Si diblock: 55%, total content of styrene units: 16%) Olefin-based resin 2 (manufactured by Exxon Mobil Corporation, product name: Vistamaxx 8780) Tackifier 1 (hydrogenated alicyclic petroleum resin, manufactured by Kolon Industries, Inc., product name: SUKOREZ SU-100S) Tackifier 2 (manufactured by Eastman Chemical Company, product name: Regalite 1090) Tackifier 3 (manufactured by Eastman Chemical Company, product name: Regalite 5100) Tackifier 4 (manufactured by Eastman Chemical Company, product name: Regalite 1010) Oil (paraffin oil, manufactured by PETROYAG Lubricants, product name: OYSTER 259) Antioxidant (manufactured by BASF Japan Ltd., product name: Irganox 1010) | | | | | |

| | Kind | Softening point (°C) | Molecular weight (g/mol) | Mw/Mn |
|---|---|---|---|---|
| Tackifier 1 | Thermoplastic resin | 100 to 109 | 470 | - |
| Tackifier 2 | Fully hydrogenated hydrocarbon-based resin | 88 | 700 | 1.4 |
| Tackifier 3 | Partially hydrogenated hydrocarbon-based resin | 100 | 900 | 1.5 |
| Tackifier 4 | Liquid phase hydrogenated hydrocarbon-based resin | Room temperature or less (liquid form) | - | - |

### [Examples 2 to 13 and 18 to 26, and Comparative Examples 1 to 9]

Each of pressure-sensitive adhesive tapes was produced in the same manner as in Example 1 except that the base material, the pressure-sensitive adhesive compositions for forming the first pressure-sensitive adhesive layer and the second pressure-sensitive adhesive layer, and the thickness of each layer were changed as shown in Tables 2 to 4.

### 1. Pressure-sensitive Adhesive Strength

Each of the pressure-sensitive adhesive tapes of Examples and Comparative Examples was cut to a width of 25 mm to prepare a sample so that the adhesion area had a width of 25 mm and a length of 50 mm. A SUS 304 plate was used as an adherend. The sample was pressure-bonded to the surface of the SUS plate by two reciprocations under a load of 2 kg so that the above-mentioned adhesion area (25 mm×50 mm) was obtained. After the resultant was left to stand still at room temperature (23°C) for 30 minutes from the pressure bonding, the sample was peeled off at an angle of 90° and a peel rate of 300 mm/min, and the pressure-sensitive adhesive strength was measured. For the measurement, an AR-1000 tester manufactured by ChemInstruments, Inc. was used. The resultant pressure-sensitive adhesive strength was converted into a unit of N/25 mm, and an average value of three sample specimens was adopted as the pressure-sensitive adhesive strength of the sample.

### 2. Anchoring Failure

When the surface of the SUS plate after the above-mentioned pressure-sensitive adhesive strength test was visually observed and no pressure-sensitive adhesive residue was observed, the anchoring strength was evaluated as "∘" (satisfactory), and an average value of the measurement results was adopted as the pressure-sensitive adhesive strength. When the surface of the SUS plate after the pressure-sensitive adhesive strength test was visually observed and a pressure-sensitive adhesive residue was observed, the anchoring strength was evaluated as "×", and the pressure-sensitive adhesive strength was indicated as "anchoring failure" because the strength was not able to be measured.

### 3. Method of measuring Storage Elastic Modulus G'

A sample punched out into a disc shape having a thickness of about 1 mm and a diameter of 7.9 mm was produced through use of each of Styrenes 2, 7, and 8. Then, the produced sample was sandwiched and fixed between parallel plates, and the dynamic viscoelastic measurement was performed with a viscoelasticity tester (for example, product name: DISCOVERY HR-3 HYBRID RHEOMETER manufactured by TA Instruments Japan Inc.) under the following conditions, to thereby determine the storage elastic modulus G' (25°C).
·Measurement mode: shear mode
·Temperature range: -40°C to 120°C
·Temperature increase rate: 3°C/min
·Measurement frequency: 1.6 Hz

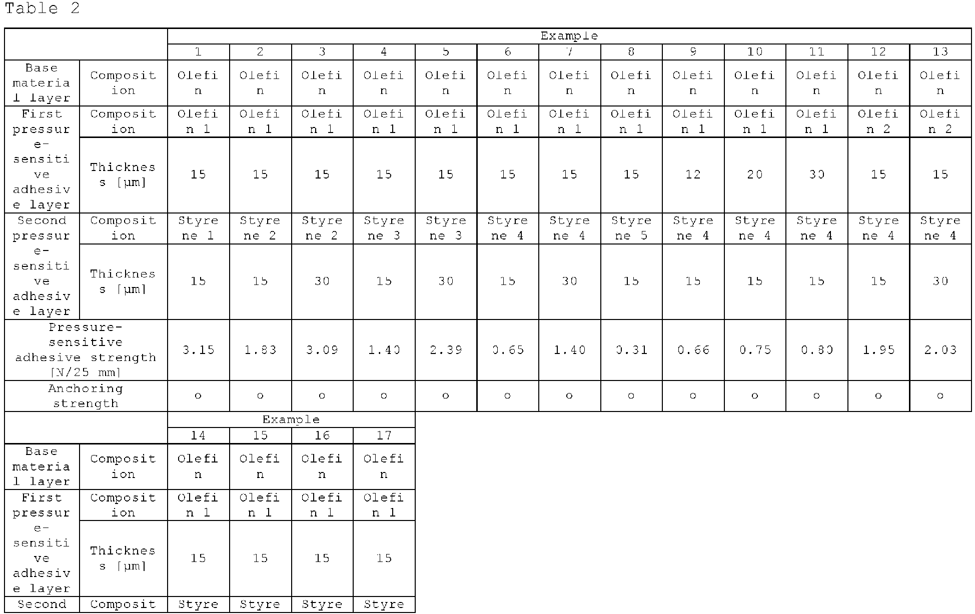

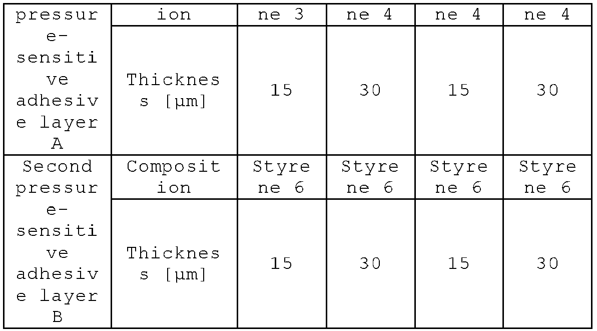

**Table 3**

| | | Example | | | | | | | | |
|---|---|---|---|---|---|---|---|---|---|---|
| | | 18 | 19 | 20 | 21 | 22 | 23 | 24 | 25 | 26 |
| Base material layer | Composition | Olefin | Olefin | Olefin | Olefin | Olefin | Olefin | Olefin | Olefin | Olefin |
| First pressure-sensitive adhesive layer | Composition | Olefin 1 | Olefin 1 | Olefin 1 | Olefin 1 | Olefin 2 | Olefin 2 | Olefin 3 | Olefin 3 | Olefin 3 |
| | Thickness [µm] | 15 | 15 | 15 | 15 | 15 | 15 | 15 | 15 | 15 |
| Second pressure-sensitive adhesive layer | Composition | Styrene 7 | Styrene 7 | Styrene 8 | Styrene 8 | Styrene 7 | Styrene 8 | Styrene 2 | Styrene 7 | Styrene 8 |
| | Thickness [µm] | 15 | 10 | 15 | 10 | 15 | 15 | 15 | 15 | 15 |
| Pressure-sensitive adhesive strength [N/25 mm] | | 6. 06 | 4.80 | 7.44 | 6.17 | 8.16 | 8.24 | 2.05 | 8.04 | 8.63 |
| Anchoring strength | | ○ | ○ | ○ | ○ | ○ | ○ | ○ | ○ | ○ |

| | | Example | | | | | | | | |
|---|---|---|---|---|---|---|---|---|---|---|
| | | 27 | 28 | 29 | 30 | 31 | 32 | | | |
| Base material layer | Composition | Olefin | Olefin | Olefin | Olefin | Olefin | Olefin | | | |
| First pressure-sensitive adhesive layer | Composition | Olefin 1 | Olefin 1 | Olefin 2 | Olefin 2 | Olefin 3 | Olefin 3 | | | |
| | Thickness [µm] | 15 | 15 | 15 | 15 | 15 | 15 | | | |
| Second pressure-sensitive adhesive layer | Composition | Styrene 2 | Styrene 7 | Styrene 7 | Styrene 8 | Styrene 7 | Styrene 8 | | | |
| | Thickness [µm] | 15 | 15 | 15 | 15 | 15 | 15 | | | |
| Pressure-sensitive adhesive strength [N/25 mm] | | 1.95 | 5.68 | 7.96 | 8.35 | 8.08 | 8.50 | | | |
| Anchoring strength | | ○ | ○ | ○ | ○ | ○ | ○ | | | |

**Table 4**

| | | Comparative Example | | | | | | | | |
|---|---|---|---|---|---|---|---|---|---|---|
| | | 1 | 2 | 3 | 4 | 5 | 6 | 7 | 8 | 9 |
| Base material layer | Composition | Olefin | Olefin | Olefin | Olefin | Olefin | Olefin | Olefin | Olefin | Olefin |
| First pressure-sensitive adhesive layer | Composition | - | - | Styrene 6 | Styrene 6 | Styrene 6 | Styrene 6 | Styrene 6 | Styrene 6 | Styrene 1 |
| | Thickness [µm] | - | - | 15 | 15 | 15 | 15 | 15 | 15 | 15 |
| Second pressure-sensitive adhesive layer | Composition | Styrene 1 | Styrene 4 | Styrene 1 | Styrene 1 | Styrene 2 | Styrene 3 | Styrene 4 | Styrene 5 | Styrene 1 |
| | Thickness [µm] | 30 | 30 | 30 | 15 | 30 | 30 | 30 | 30 | 30 |
| Pressure-sensitive adhesive strength [N/25 mm] | | Anchorin g failure | Anchorin g failure | Anchorin g failure | Anchorin g failure | Anchorin g failure | Anchorin g failure | Anchorin g failure | Anchorin g failure | Anchorin g failure |
| Anchoring strength | | × | × | × | × | × | × | × | × | × |

### [Examples 14 to 17]

Two kinds of pressure-sensitive adhesive compositions having different pressure-sensitive adhesive strengths were used as pressure-sensitive adhesive compositions for forming a second pressure-sensitive adhesive layer. A pressure-sensitive adhesive tape including a second pressure-sensitive adhesive layer A and a second pressure-sensitive adhesive layer B formed on a first pressure-sensitive adhesive layer through pattern coating was obtained through use of TrueCoat Slot Applicator manufactured by Nordson Corporation. A pressure-sensitive adhesive composition for forming the first pressure-sensitive adhesive layer, a pressure-sensitive adhesive composition for forming the second pressure-sensitive adhesive layer A, and a pressure-sensitive adhesive composition for forming the second pressure-sensitive adhesive layer B were simultaneously laminated and applied to a surface of a base material not subjected to release treatment. The pattern of the pattern coating was as follows: second pressure-sensitive adhesive A: 17 mm width, second pressure-sensitive adhesive B: 8 mm width, and gap between second pressure-sensitive adhesives A and B: 1 mm width. The application was performed at an application temperature of 160°C and a line speed of 100 m/min.

The second pressure-sensitive adhesive layer A of the pressure-sensitive adhesive tape obtained in each of Examples 14 to 17 was bonded to a commercially available packaging material (printed film) for packaging a product. After the bonding, the whole was left to stand still at room temperature (23°C) for 30 minutes. Then, the second pressure-sensitive adhesive layer A was peeled off from the printed film, and the surface of an adherend after the peeling was visually observed. An evaluation was performed with three sample specimens. For the pressure-sensitive adhesive tapes of Examples 14 to 17, all three sample specimens of each adhesive tape were able to be peeled off from the adherend without leaving any adhesive residue. When the pressure-sensitive adhesive tape was peeled off, no peeling of a printed portion on the surface of the printed film was observed. In addition, the second pressure-sensitive adhesive layer A of the pressure-sensitive adhesive tape after the peeling was bonded again to the printed film. The pressure-sensitive adhesive tape sufficiently adhered to the printed film and was re-bondable.

### [Examples 27 to 32]

Materials shown in Table 1 were mixed to prepare pressure-sensitive adhesive compositions for forming a first pressure-sensitive adhesive layer and a second pressure-sensitive adhesive layer.

A non-stretched PP film (thickness: 80 pm) subjected to release treatment on a surface opposite to a pressure-sensitive adhesive composition applied surface was used as a base material. The pressure-sensitive adhesive composition for forming the first pressure-sensitive adhesive layer was applied to a surface of the base material not subjected to the release treatment through use of TrueCoat Slot Applicator (manufactured by Nordson Corporation) to form a pressure-sensitive adhesive layer (first pressure-sensitive adhesive layer), and the resultant was stored at 23°C for 24 hours. Then, the pressure-sensitive adhesive composition for forming the second pressure-sensitive adhesive layer was laminated and applied to the first pressure-sensitive adhesive layer to provide a pressure-sensitive adhesive tape. An application temperature was 160°C, and a line speed was 100 m/min. The thickness of the first pressure-sensitive adhesive layer was 15 um, and the thickness of the second pressure-sensitive adhesive layer was 15 um. The evaluations described above were performed through use of the resultant pressure-sensitive adhesive tapes.

### Industrial Applicability

The pressure-sensitive adhesive tape according to the embodiment of the present invention can suppress anchoring failure even when the pressure-sensitive adhesive tape includes a pressure-sensitive adhesive layer having a high pressure-sensitive adhesive strength. Thus, for example, a pressure-sensitive adhesive tape including a pressure-sensitive adhesive layer that may be increased in pressure-sensitive adhesive strength during storage can also be used.

### Reference Signs List

- **100**: pressure-sensitive adhesive tape
- **101**: pressure-sensitive adhesive tape
- **102**: pressure-sensitive adhesive tape
- **10**: base material
- **20**: first pressure-sensitive adhesive layer
- **30**: second pressure-sensitive adhesive layer
- **31**: strong pressure-sensitive adhesive portion
- **32**: weak pressure-sensitive adhesive portion

## Claims

1. A pressure-sensitive adhesive tape, comprising a base material including an olefin-based resin, a first pressure-sensitive adhesive layer including an olefin-based resin, and a second pressure-sensitive adhesive layer including a styrene-based elastomer.

2. The pressure-sensitive adhesive tape according to claim 1, wherein the olefin-based resin included in the base material contains a propylene-based resin.

3. The pressure-sensitive adhesive tape according to claim 2, wherein a content of the propylene-based resin in the olefin-based resin included in the base material is from 40 wt% to 100 wt%.

4. The pressure-sensitive adhesive tape according to any one of claims 1 to 3, wherein the first pressure-sensitive adhesive layer has a thickness of from 5 pm to 30 pm.

5. The pressure-sensitive adhesive tape according to any one of claims 1 to 4, wherein the second pressure-sensitive adhesive layer has a thickness of from 5 pm to 50 pm.

6. The pressure-sensitive adhesive tape according to any one of claims 1 to 5, wherein a surface of the base material on which the first pressure-sensitive adhesive layer is prevented from being formed is subjected to release treatment.

7. The pressure-sensitive adhesive tape according to any one of claims 1 to 6, wherein the olefin-based resin included in the first pressure-sensitive adhesive layer contains a propylene-based resin.

8. The pressure-sensitive adhesive tape according to any one of claims 1 to 7,
wherein a pressure-sensitive adhesive composition for forming the first pressure-sensitive adhesive layer further contains a tackifier, and
wherein a content of the tackifier is from 20 wt% to 60 wt%.

9. The pressure-sensitive adhesive tape according to any one of claims 1 to 8, wherein the second pressure-sensitive adhesive layer is formed of a pressure-sensitive adhesive composition containing a styrene-isoprene block copolymer, an olefin-based elastomer, and a tackifier.

10. The pressure-sensitive adhesive tape according to claim 9, wherein the styrene-isoprene block copolymer has a styrene content of from 10 wt% to 25 wt%.

11. The pressure-sensitive adhesive tape according to claim 9 or 10, wherein the styrene-isoprene block copolymer contains a diblock copolymer.

12. The pressure-sensitive adhesive tape according to any one of claims 9 to 11, wherein a content of the tackifier is from 2 wt% to 40 wt%.

13. The pressure-sensitive adhesive tape according to any one of claims 9 to 12, wherein the tackifier contains a hydrogenated petroleum resin.

14. The pressure-sensitive adhesive tape according to any one of claims 9 to 13, wherein the pressure-sensitive adhesive composition for forming the second pressure-sensitive adhesive layer further contains an oil.

15. The pressure-sensitive adhesive tape according to claim 14, wherein a content of the oil is from 5 wt% to 30 wt%.

16. The pressure-sensitive adhesive tape according to any one of claims 1 to 15, wherein the second pressure-sensitive adhesive layer has a pressure-sensitive adhesive strength to a stainless-steel plate of from 0.05 N/25 mm to 15 N/25 mm.

17. The pressure-sensitive adhesive tape according to any one of claims 1 to 16, wherein a difference in melt viscosity at 160°C between a pressure-sensitive adhesive composition for forming the first pressure-sensitive adhesive layer and a pressure-sensitive adhesive composition for forming the second pressure-sensitive adhesive layer is 50,000 mPa·s or less.

18. The pressure-sensitive adhesive tape according to any one of claims 1 to 17, wherein the second pressure-sensitive adhesive layer includes at least two portions having different pressure-sensitive adhesive strengths including a strong pressure-sensitive adhesive portion and a weak pressure-sensitive adhesive portion.

19. The pressure-sensitive adhesive tape according to claim 18, wherein a difference in pressure-sensitive adhesive strength to a stainless-steel plate between the strong pressure-sensitive adhesive portion and the weak pressure-sensitive adhesive portion is from 1 N/25 mm to 10 N/25 mm.

20. A method of producing a pressure-sensitive adhesive tape including a base material including an olefin-based resin, a first pressure-sensitive adhesive layer including an olefin-based resin, and a second pressure-sensitive adhesive layer including a styrene-based elastomer in the stated order,
the method comprising:
applying a pressure-sensitive adhesive composition for forming the first pressure-sensitive adhesive layer to the base material by hot-melt coating; and
applying a pressure-sensitive adhesive composition for forming the second pressure-sensitive adhesive layer to the first pressure-sensitive adhesive layer by hot-melt coating.

21. The method of producing a pressure-sensitive adhesive tape according to claim 20, comprising simultaneously applying the pressure-sensitive adhesive composition for forming the first pressure-sensitive adhesive layer and the pressure-sensitive adhesive composition for forming the second pressure-sensitive adhesive layer by hot-melt coating.

22. The method of producing a pressure-sensitive adhesive tape according to claim 20 or 21,
wherein the second pressure-sensitive adhesive layer includes at least two portions having different pressure-sensitive adhesive strengths including a strong pressure-sensitive adhesive portion and a weak pressure-sensitive adhesive portion, and
wherein the method comprises applying the pressure-sensitive adhesive compositions for forming the respective portions by pattern coating.
